# EUROPEAN PATENT APPLICATION

(11) **EP 3 306 159 A1**
(43) Date of publication of application: **11.04.2018**
(21) Application number: 16803145.8
(22) Date of filing: 24.05.2016
(51) Int. Cl.: F16L 9/14, F16L 23/024, F16L 57/00, F16L 58/14

(54) **PIPING**

(30) Priority: 02.06.2015 JP 2015112148
(71) Applicant: Sumitomo Metal Mining Co., Ltd., Tokyo 105-8716 (JP)
(72) Inventor: NAGAMOTO, Yoshiharu, Tokyo 105-8716 (JP); MUTA, Souichirou, Tokyo 105-8716 (JP)
(74) Representative: Jones, Nicholas Andrew
(86) International application number: PCT/JP2016/065335
(87) International publication number: WO 2016/194710

(57) **Abstract**

The present invention provides piping that is capable, when transporting a slurry or slurry-containing steam, of effectively limiting abrasion and corrosion and effectively preventing leakage of said slurry or steam. This piping 10 for transporting a slurry or slurry-containing steam is formed in a tube-shape from a three-layer structure of a corrosion-resistant base material layer 11s that configures the outer layer, an abrasion-resistant lining material layer 12s that configures the inner layer, and a filler material layer 13s for filling in the space between the base material layer 11s and the lining material layer 12s.

## Description

### TECHNICAL FIELD

The present invention relates to piping, more particularly, it relates to piping for sending a slurry and slurry-containing steam.

### BACKGROUND ART

In the smelting of nickel oxide ores having a low nickel grade using high pressure acid leach (HPAL, hereinafter referred to as "HPAL"), first, a nickel oxide ore is classified, the nickel oxide ore which is obtained by the classification and thus has a predetermined size is repulped to obtain an ore slurry (hereinafter also simply referred to as "slurry"), the temperature and pressure of this slurry are stepwisely raised, and the slurry is transported to an autoclave. Next, an acid such as sulfuric acid is added into the autoclave, and nickel and the like are leached out from the slurry of nickel oxide ore. The temperature and pressure of the slurry after leaching are stepwisely lowered, and the slurry is sent to the next process.

In this process by HPAL, the treatment to raise the temperature and the pressure of the slurry as described above is a treatment utilizing waste steam at a high temperature to be generated in the HPAL process. The slurry to be treated is charged into a pressure vessel (hereinafter referred to as "heater tank") by using a centrifugal pump, the temperature of the slurry is raised by the steam blown into the heater tank, and the slurry is transported to the next heater tank. The temperature is raised to a desired temperature by stepwisely conducting such temperature rising.

When stepwisely raising the temperature of the slurry by using heater tanks, a method is adopted in which the centrifugal pumps are disposed in series and the slurry is transported by raising the discharge pressure since the pressure difference between the heater tanks is great.

Generally, the outer diameter of the suction piping of the centrifugal pump is larger than the outer diameter of the discharge piping. For this reason, in order to dispose the centrifugal pumps of the same type in series, piping having different pipe diameters at one end and the other end, so-called piping with different diameters is used for connection between the centrifugal pumps to be connected in series.

However, there is a problem that abrasion is likely to occur at the places connected by the piping with different diameters by the slurry to be transported at a high pressure and remarkable local abrasion progresses at the places depending on the way of flow of the slurry.

Furthermore, waste steam from the decompression tank provided in the next process of the autoclave is utilized in the treatment to raise the temperature and the pressure in the HAPL process and the slurry is acidic due to the acid such as sulfuric acid contained in the waste steam, and there is thus a problem that not only abrasion due to the transport of slurry at a high pressure but also corrosion due to the transport of acidic slurry at a high temperature progress.

When such abrasion and corrosion occur, a hole is finally formed on the piping with different diameters and the acidic slurry at a high temperature and a high pressure jets out. Hence, it is required to effectively prevent abrasion and corrosion of the piping with different diameters when transporting the acidic slurry at a high temperature and a high pressure.

In addition, waste steam to be used in the treatment to raise the temperature and pressure of the slurry is sent from the decompression tank to the heater tank by using piping, but waste steam that has passed through the autoclave is used as the waste steam, and the waste steam is thus acidic steam at a high temperature and a high pressure or acidic slurry-containing steam. Hence, the abrasion and corrosion of piping from the decompression tank to the heater tank quickly progress when also sending the steam in the same manner as the above-described problem that is arisen at the time of transport of the slurry.

Furthermore, piping is also used when transporting acidic slurry to a treatment tank for the treatment to lower the temperature and pressure of the slurry to be provided next to the autoclave, and the abrasion and corrosion of the piping also quickly progress in the same manner.

For these reasons, piping exhibiting excellent abrasion resistance and corrosion resistance is demanded.

Here, in order to enhance the abrasion resistance of piping, a method in which boarding (sometimes called a "sacrificial plate") is attached to the abraded place of the piping, a method in which a cushioning material is pasted in order to enhance impact resistance, or a method in which an abrasion-resistant material is attached by build-up welding or thermal spraying is used. However, these methods have the following problems.

### (Problem in Case of Attaching Sacrificial Plate)

The method in which a sacrificial plate is attached to the piping is a method in which a sacrificial plate which is composed of the same material and has the same thickness as the piping is attached to a specific place in the piping by welding. Piping for transporting acidic slurry at a high temperature and a high pressure is required to exhibit corrosion resistance, and an expensive material such as titanium is used in the sacrificial plate. Hence, this method is easily implemented in terms of installation but requires a high cost. In addition, materials such as titanium exhibit corrosion resistance but do not exhibit abrasion resistance, and the materials are thus used up in a few months even though the plate thickness is increased to prolong the lifespan and thus required to be repaired or replaced. For this reason, a limited effect is obtained by the method in which a sacrificial plate is attached, and the implementation of the method is accompanied by an increase in working cost.

### (Problem in Case of Pasting Cushioning Material)

The cushioning material is typified mainly by a rubber-based material. However, it is difficult to apply a cushioning material composed of a rubber-based material which does not exhibit heat resistance to piping for sending a slurry or slurry-containing steam since the temperature of the slurry is raised up to about from 100°C to 200°C in the treatment to raise the temperature of the slurry in the HPAL process.

### (Problem in Case of Attaching Abrasion-Resistant Material)

As the abrasion-resistant material to withstand fluid abrasion, a number of materials are used as can be seen in hardfacing and high molecular weight polyethylene, but these general abrasion-resistant materials are limited to use at normal temperature and frail in an acidic atmosphere. For this reason, those which meet the conditions for transporting the acidic slurry at a high temperature and a high pressure are limited to materials such as a ceramic. A ceramic-lined steel pipe is widely used as piping in which a ceramic is used, but this ceramic-lined steel pipe focuses on the abrasion resistance of the ceramic and carbon steel is thus used in the part to be the base material of piping. In this manner, carbon steel is used as the base material in the ceramic-lined steel pipe as well, and the acidic slurry thus corrodes the carbon steel which is inferior in corrosion resistance in a short time and, as a result, a hole is formed on the piping in a case in which defects such as cracks are generated to the ceramic of the lining.

For example, Patent Document 1 discloses an abrasion-resistant structure which has a structure to accumulate a particulate material at a bent portion of the piping and protects the piping itself by the accumulated particulate material for the purpose of suppressing abrasion at the bent portion of the piping to transport a particulate material. However, a problem arises that a turbulent flow and the like are generated at the structure part to promote the abrasion in the case of applying such a method to piping for transporting a liquid including a slurry or slurry-containing steam. It is also impossible to predict rebounding of the slurry and slurry-containing steam after collision. Hence, the abrasion-resistant structure cannot be effectively applied to piping for transporting a slurry and slurry-containing steam.

Patent Document 1: Japanese Unexamined Patent Application, Publication No. 2001-50474

### DISCLOSURE OF THE INVENTION

### Problems to be Solved by the Invention

The present invention has been proposed in view of such circumstances, and an object thereof is to provide piping of which the abrasion and corrosion can be effectively suppressed and which can effectively prevent leakage of the slurry or steam when transporting a slurry or slurry-containing steam.

### Means for Solving the Problems

The inventors of the present invention have conducted intensive investigations to solve the above-mentioned problems. As a result, it has been found out that it is possible to effectively suppress abrasion and corrosion when transporting a slurry and slurry-containing steam by adopting piping formed in a tubular shape by a three-layer structure of a corrosion-resistant base material layer, an abrasion-resistant lining material layer, and a filling material layer for filling the space between the base material layer and the lining material layer, thereby completing the present invention. In other words, the present invention provides the following.
(1) A first aspect of the present invention is piping for transporting a slurry or slurry-containing steam, in which the piping is formed in a tubular shape by a three-layer structure of a corrosion-resistant base material layer which configures an outer layer, an abrasion-resistant lining material layer which configures an inner layer, and a filling material layer which is for filling space between the base material layer and the lining material layer.
(2) A second aspect of the present invention is the piping according to the first aspect, in which the piping is piping with different diameters which has different outer diameters on an upstream side and a downstream side.
(3) A third aspect of the present invention is the piping according to the first or second aspect, in which a material configuring the filling material layer is mortar.
(4) A fourth aspect of the present invention is the piping according to any one of the first to third aspects, in which a material configuring the lining material layer is a ceramic.
(5) A fifth aspect of the present invention is the piping according to any one of the first to fourth aspects, in which a material configuring the lining material layer is a ceramic containing silicon carbide.
(6) A sixth aspect of the present invention is the piping according to any one of the first to fifth aspects, in which the piping is used in a plant for conducting a hydrometallurgical process to leach out and recover nickel from a nickel oxide ore by high pressure acid leach.
(7) A seventh aspect of the present invention is the piping according to any one of the first to sixth aspects, in which a stub end is provided at both ends of the piping and a flange is provided on a back side of the stub end.

### Effects of the Invention

According to the piping of the present invention, it is possible to effectively suppress abrasion and corrosion and to effectively prevent leakage of the slurry or steam when transporting a slurry or slurry-containing steam. In addition, it is possible to easily conduct maintenance and to increase the lifespan of the piping.

### BRIEF DESCRIPTION OF THE DRAWINGS

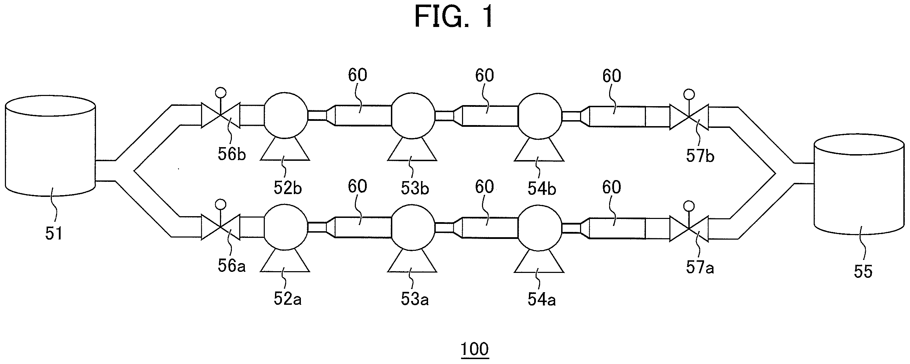

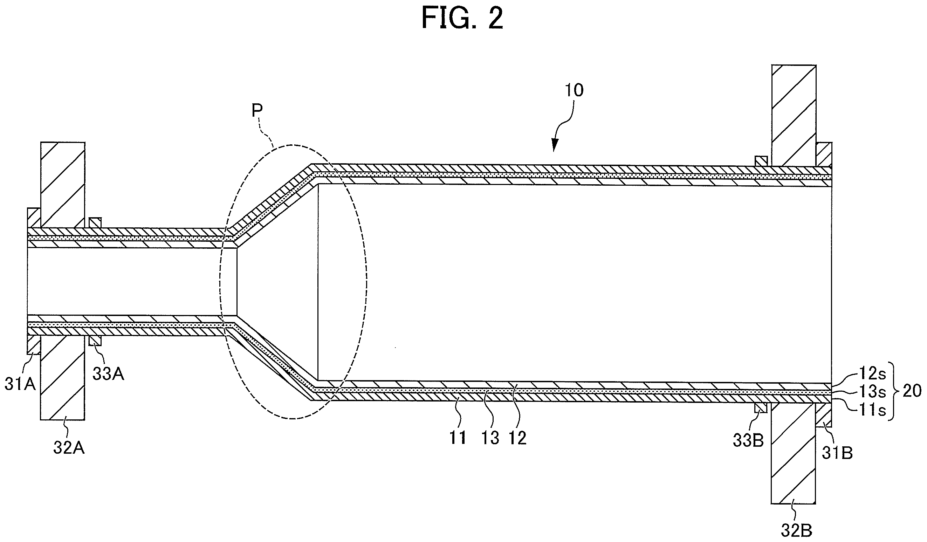

Fig. 1 is a schematic diagram which illustrates an example of the configuration of a plant facility provided with piping. Fig. 2 is a cross-sectional diagram which illustrates an example of the configuration of piping.

### PREFERRED MODE FOR CARRYING OUT THE INVENTION

Hereinafter, specific embodiments of the present invention (hereinafter referred to as the "present embodiments") will be described in detail with reference to the drawings. Incidentally, the present invention is not limited to the following embodiments but can be modified in various ways as long as the gist of the present invention is not changed.

### <<1. Facility Equipped with Piping>>

The piping according to the present embodiment is piping for sending a slurry or slurry-containing steam. This piping can be used, for example, in a plant for a HPAL process to leach out nickel from a slurry of nickel oxide ore by sulfuric acid and the like at a high temperature and a high pressure. More specifically, the piping can be used as a transport piping for stepwisely raising the temperature and pressure of the slurry of nickel oxide ore and transporting the slurry to an autoclave, and not only the slurry but also steam containing the slurry are transported through this piping.

Incidentally, the HPAL process in hydrometallurgy of a nickel oxide ore is a process in which an acid such as sulfuric acid is added to an ore slurry containing the nickel oxide ore of a raw material and the slurry is stirred while being pressurized at a high temperature condition of about from 220°C to 280°C to obtain a leached slurry containing a leachate to which valuable metals such as nickel are leached and a leach residue.

Fig. 1 is a schematic diagram which illustrates an example of the configuration of a plant facility for an HPAL process. In the treatment to raise the temperature and pressure of the slurry in the HPAL process, the slurry to be treated is charged into a first heater tank 51 illustrated in a plant facility 100 of Fig. 1, the temperature and pressure of the slurry are stepwisely raised via a plurality of centrifugal pumps 52, 53, and 54 connected to the first heater tank 51, and the slurry is then transported to a second heater tank 55 of a heater tank provided next to the first heater tank 51. Piping 60 for transporting the slurry is provided between the adjacent centrifugal pumps, and the slurry of which the temperature and pressure have been stepwisely raised by the centrifugal pumps 52, 53, and 54 is sequentially sent through the piping 60.

Incidentally, a case in which three centrifugal pumps 52, 53, and 54 are provided between two heater tanks is illustrated in the plant facility 100 of Fig. 1 as an example, but the number of centrifugal pumps installed is not limited to this. In addition, a case of providing two systems in which three centrifugal pumps are connected to three pieces of piping 60 in series is illustrated in the plant facility 100 as an example, but it is not limited to such two systems (system a and system b), and it may be one system or three or more systems. In addition, the control of slurry transport between the heater tanks is conducted by opening and closing the automatic valves 56 and 57 in the plant facility 100.

Here, in the piping 60 to be used in such an HPAL process, the discharge pressure is increased by using a distal pump and the slurry is transported at a high pressure, abrasion thus occurs depending on the flow direction of the slurry. In addition, the treatment to raise the temperature and pressure of the slurry is conducted by utilizing the waste steam generated by the leaching treatment by an acid such as sulfuric acid in the HPAL process, and thus corrosion by the acid also progresses in the piping 60.

In the present embodiment, piping equipped with corrosion resistance and abrasion resistance is used as the piping for transporting a slurry or slurry-containing steam in such a plant facility for, for example, the HPAL process. Hereinafter, the specific configuration of the piping will be described in detail.

### <<2. Configuration of Piping>>

Fig. 2 is a cross-sectional diagram which illustrates an example of the configuration of piping according to the present embodiment. As illustrated in Fig. 2, piping 10 is formed in a tubular shape by a cylindrical base material 11. Moreover, this piping 10 is configured by a cylindrical base material 11, a lining material 12 having an outer diameter smaller than the inner diameter of the base material 11, and a filling material 13 to fill the space between the base material 11 and the lining material 12.

As illustrated in Fig. 2, this piping 10 has a three-layer structure 20 of a layer (hereinafter referred to as the "base material layer 11s") composed of the base material 11, a layer composed of the lining material 12 (hereinafter referred to as the "lining material layer 12s"), and a layer which is composed of the filling material 13 to fill the base material layer and the lining material layer (hereinafter referred to as the "filling material layer 13s") in the cross section thereof, and this three-layer structure 20 is integrally formed in a tubular shape.

Incidentally, this three-layer structure 20 is also expressed as "base material layer 11s/filling material layer 13s/lining material layer 12s" hereinafter, and this means that the piping 10 has a layer structure formed by the base material layer 11s, the filling material layer 13s, and the lining material layer 12s in order from the outer side (outer layer) to the inner side (inner layer).

### (1) Base Material

The base material 11 is composed of a cylindrical material and configures the base body of the piping 10 having a tubular structure. The base material 11 is configured by a material exhibiting corrosion resistance and preferably by stainless steel, nickel or a nickel alloy, titanium or a titanium alloy, cobalt or a cobalt alloy, and the like.

Specifically, stainless steel is an inexpensive material, and corrosion resistance can be relatively inexpensively and effectively obtained by stainless steel. In addition, higher corrosion resistance can be obtained by nickel or a nickel alloy, titanium or a titanium alloy, cobalt or a cobalt alloy.

Incidentally, in the case of configuring the piping 10 as piping having different outer diameters on the upstream side and the downstream side through which the slurry is transported, so-called piping with different diameters, for example, as illustrated in Fig. 2, the base material 11 may be configured by a material having a substantially conical shape at the part at which the outer diameter changes (the part denoted by "P" in Fig. 2).

The wall thickness of the base material 11, namely, the thickness of the base material layer 11s when viewed in cross section is not particularly limited as long as corrosion resistance can be effectively exhibited, but it can be set to about from 5 mm to 15 mm, for example. Incidentally, the wall thickness of the base material 11 depends on the sizes, for example, the overall length and the pipe diameter of the piping 10 and it is thus preferable to appropriately adjust the wall thickness of the base material 11 according to the sizes thereof.

### (2) Lining Material

The lining material 12 is composed of a cylindrical material in the same manner as the base material 11, has an outer diameter smaller than the inner diameter of the base material 11, and is disposed on the inner side of the base material 11. This lining material 12 configures the lining material layer 12s when viewed in cross section, that is, it is to be the inner layer positioned on the innermost side in the three-layer structure 20 of the base material layer 11s/filling material layer 13s/lining material layer 12s which configures the tubular shape of the piping 10.

Incidentally, in the case of configuring the piping 10 as piping with different diameters, the lining material 12 may be configured by a material having a substantially conical shape at the part at which the outer diameter changes (the part denoted by "P" in Fig. 2) in the same manner as the base material 11.

The lining material 12 is configured by a material exhibiting abrasion resistance and preferably by a ceramic. As described above, the lining material 12 is positioned on the innermost side of the piping 10 and brought into contact with a slurry and slurry-containing steam which pass through the piping 10, and it is possible to effectively prevent abrasion of the piping 10 when transporting the slurry and the like by forming such a lining material 12 of a material exhibiting abrasion resistance.

Specifically, a ceramic has a heat resisting temperature of 1000°C or higher and exhibits excellent abrasion resistance. Abrasion resistance can be effectively imparted by configuring the lining material 12 preferably of a ceramic. In addition, those containing silicon carbide is more preferable as the ceramic. According to a ceramic containing silicon carbide, not only abrasion resistance but also acid resistance and corrosion resistance can be imparted to the lining material 12.

The wall thickness of the lining material 12, namely, the thickness of the lining material layer 12s when viewed in cross section is not particularly limited as long as abrasion resistance can be effectively exhibited, but it can be set to about from 4 mm to 10 mm, for example. Incidentally, the wall thickness of the lining material layer 12 depends on the sizes of the piping 10 such as the total length and the pipe diameter and also the wall thickness of the base material 11, and it is thus preferable to appropriately adjust the wall thickness of the lining material layer 12 according to the sizes thereof.

### (3) Filling Material

The filling material 13 is for filling and bonding the space between the base material 11 and the lining material 12 and configures the filling material layer 13s of the intermediate layer positioned between the base material layer 11s and the lining material layer 12s when viewed in cross section.

The filling material 13 is configured by, for example, cement or a material containing cement. More specifically, it can be configured by using mortar. Mortar is particularly preferable since it is easily available and easily installed when filling the space between the base material 11 and the lining material 12.

The wall thickness of the filling material 13, namely, the thickness of the filling material layer 13s when viewed in cross section is not particularly limited as long as the space between the base material 11 and the lining material 12 can be effectively filled, but it can be set to about from 2 mm to 8 mm, for example. Incidentally, the wall thickness of the filling material layer 13 depends on the sizes of the piping 10 such as the total length and the pipe diameter and also the wall thicknesses of the base material 11 and the lining material 12, and it is thus preferable to appropriately adjust the wall thickness of the filling material layer 13 according to the sizes thereof.

As described above, the piping 10 according to the present embodiment is formed in a tubular shape by the three-layer structure of the base material layer 11s composed of the base material 11 which configures the outer layer and exhibits corrosion resistance, the lining material layer 12s composed of the lining material 12 which configures the inner layer and exhibits abrasion resistance, and the filling material layer 13s composed of the filling material 13 which fills the space between the base material 11 and the lining material 12. As an example, the piping 10 is formed in a tubular shape by a three-layer structure of, for example, the base material layer 11s composed of stainless steel having a thickness of 8 mm, the lining material layer 12s composed of a ceramic having a thickness of 7 mm, and a filling material layer 13s composed of mortar which has a thickness of 5 mm and is for bonding the stainless steel and the ceramic.

According to the piping 10 formed in a tubular shape by such a three-layer structure, it is possible to effectively suppress abrasion and corrosion and to effectively prevent leakage of the slurry or steam when transporting a slurry or slurry-containing steam. In addition, even in a case in which the abrasion has progressed and the lining material 12 is thus partly worn away along with the transport of the slurry, it is possible to prevent the base material 11 from being immediately abraded since the filling material 13 exists on the outer side of the lining material 12. Furthermore, even if the filling material 13 is also partly worn away by abrasion, it is possible to prevent the hole and the like from being immediately formed since the base material 11 is configured by a material exhibiting corrosion resistance.

Furthermore, according to the piping 10 having such a configuration, it is required to periodically replace only the lining material 12 configuring the inner layer at the time of maintenance and it is possible to suppress the repair cost and to increase the lifespan of the piping.

### «3. Shape and Other Configurations of Piping»

The piping 10 according to the present embodiment is not particularly limited, but it can be configured as piping having different outer diameters on the upstream side and the downstream side through which the slurry is transported, namely, so-called piping with different diameters as illustrated in the schematic cross-sectional diagram of Fig. 2. The piping with different diameters has a part at which the outer diameter changes (the part denoted by "P" in Fig. 2).

Here, in the case of transporting the slurry at a high pressure via the piping with different diameters, turbulent flow of the slurry which has flowed from the upstream side (the left side in the schematic cross-sectional diagram of Fig. 2) is likely to be generated particularly at the part P at which the outer diameter changes. When such turbulent flow is generated, local abrasion is likely to progress at that part, and pipe deterioration due to abrasion and corrosion is faster as compared to a series of cylindrical piping.

In this regard as well, it is possible to effectively suppress local abrasion and corrosion and to prevent leakage of the slurry and slurry-containing steam due to pipe deterioration as the piping 10 according to the present embodiment is formed in a tubular shape by the three-layer structure of the "base material layer 11s/filling material layer 13s/lining material layer 12s" as described above. The piping 10 according to the present embodiment can be suitably used as piping with different diameters in this manner.

In addition, in the piping 10 according to the present embodiment, stub ends 31A and 31B can be provided at both end portions on the upstream side and downstream side through which the slurry is transported. Moreover, it is preferable to provide flanges 32A and 32B on the back side of the stub ends 31A and 31B provided at both end portions. In addition, the stub ends 31A and 31B and stoppers 33A and 33B may be provided at both end portions of the piping 10, and the flanges 32A and 32B may be provided between the stub ends 31A and 31B and the stoppers 33A and 33B.

Piping for transporting a highly corrosive and abrasive slurry to piping is frequently subjected to disassembly operation and assembly operation for maintenance. For this reason, it is preferable that the piping is easily disassembled and assembled. In this regard, it is possible to put the flanges 32A and 32B into a loose state with respect to the piping 10, namely, a state in which the flanges 32A and 32B can be freely rotated as the stub ends 31A and 31B are provided at both end portions and the flanges 32A and 32B are provided on the back side of the stub ends 31A and 31B. It is possible to easily conduct the disassembly and assembly operations of the piping 10 by providing the loose flanges 32A and 32B to the piping 10 such that the flanges 32A and 32B can be freely rotated in this manner.

### EXPLANATION OF REFERENCE NUMERALS

10 and 60 Piping
11 Base material
11s Base material layer
12 Lining material
12s Lining material layer
13 Filling material
13s Filling material layer
20 Three-layer structure
31A and 31B Stub end
32A and 32B Flange
33A and 33B Stopper
100 Plant facility
51 First heater tank
52, 53, and 54 Centrifugal pump
55 Second heater tank
56 and 57 Automatic valve

## Claims

1. Piping for transporting a slurry or slurry-containing steam, wherein
the piping is formed in a tubular shape by a three-layer structure of a corrosion-resistant base material layer which configures an outer layer, an abrasion-resistant lining material layer which configures an inner layer, and a filling material layer which is for filling space between the base material layer and the lining material layer.

2. The piping according to claim 1, wherein the piping is piping with different diameters which has different outer diameters on an upstream side and a downstream side.

3. The piping according to claim 1 or 2, wherein a material configuring the filling material layer is mortar.

4. The piping according to any one of claims 1 to 3, wherein a material configuring the lining material layer is a ceramic.

5. The piping according to any one of claims 1 to 4, wherein a material configuring the lining material layer is a ceramic containing silicon carbide.

6. The piping according to any one of claims 1 to 5, wherein the piping is used in a plant for conducting a hydrometallurgical process to leach out and recover nickel from a nickel oxide ore by high pressure acid leach.

7. The piping according to any one of claims 1 to 6, wherein a stub end is provided at both ends of the piping and a flange is provided on a back side of the stub end.
